# EUROPEAN PATENT SPECIFICATION

(11) **EP 2 424 162 B1**
(45) Date of publication and mention of the grant of the patent: **17.07.2013**
(21) Application number: 10785760.9
(22) Date of filing: 11.06.2010
(51) Int. Cl.: H04W 4/00, H04L 12/24, H04L 29/08

(54) **METHOD, APPARATUS AND SYSTEM FOR DEVICE MANAGEMENT**
GERÄTEVERWALTUNGSVERFAHREN, -VORRICHTUNG UND -SYSTEM
PROCÉDÉ, APPAREIL ET SYSTÈME DE GESTION DE DISPOSITIFS

(30) Priority: 12.06.2009 CN 200910147982
(43) Date of publication of application: 29.02.2012
(73) Proprietor: Huawei Technologies Co., Ltd., Shenzhen, Guangdong 518129 (CN)
(72) Inventor: ZHANG, Yongjing, Shenzhen Guangdong 518129 (CN); DING, Chuansuo, Shenzhen Guangdong 518129 (CN); WANG, Sichen, Shenzhen Guangdong 518129 (CN); FENG, Mingzheng, Shenzhen Guangdong 518129 (CN); ZHANG, Renzhou, Shenzhen Guangdong 518129 (CN); HUANG, Chen, Shenzhen Guangdong 518129 (CN)
(74) Representative: Kreuz, Georg Maria
(86) International application number: PCT/CN2010/073790
(87) International publication number: WO 2010/142247

(56) References cited:
- CN-A- 1 584 865
- CN-A- 1 735 036
- CN-A- 101 018 385
- US-A1- 2006 217 113
- US-A1- 2007 169 093
- US-A1- 2008 046 583
- US-A1- 2008 183 800
- US-A1- 2009 040 947
- US-B1- 6 874 020

## Description

### FIELD OF THE INVENTION

The present invention relates to the field of network communication technologies, and in particular, to a Device Management (DM) method, a DM apparatus and a DM system.

### BACKGROUND OF THE INVENTION

An Open Mobile Alliance (OMA) DM system in the prior art includes: a Device Management Authority (DMA), a Device Management Server (DMS), a gateway device, and a terminal device. A Device Management Client (DMC) on the terminal device is used to parse and execute a management command delivered by the DMS, and a management tree stored on the terminal device may be regarded as an interface through which the DMS manages the terminal device through a DM protocol. The management tree includes some basic Management Objects (MOs) used to implement respective functions. Through a management interface between the DMS and the DMC, the DMA operates the basic MOs in the management tree, thereby achieving an objective of performing DM operations on the terminal device. Operation commands of the DMS include Get, Replace, Exec, Copy, and Delete.

In the process of implementing the present invention, the inventors find the following problems in the prior art:

When the DMS needs to perform DM operations on multiple DMCs through a gateway device, the DMS needs to set up mutually independent DM sessions with the multiple DMCs respectively through the gateway device even if the operations are the same, and the operations are executed repeatedly in the independent DM sessions. Consequently, lots of repeated management data (including management control instructions and software/firmware upgrade packages) is transmitted on an external interface of the gateway device connected to the DMS, and link congestion of the external interface of the gateway device is caused, so as to affect the system performance and user experience.

US patent application 2009/040947 A1 discloses a method of installing a configuration scheme of an Open Mobile Alliance Device Management (OMA DM) enabled mobile device onto one or more target devices, comprising: creating a source copy of at least a portion of a management tree representing the device in accordance with the OMA DM specification, wherein the copy is generated through an OMA DM "Get" command that does not require knowledge of the structure or content of the management tree; storing the source copy in a data store accessible to an OMA DM compliant server, coupled to the mobile device over a network; comparing the source copy with a configuration scheme of a target mobile device; and transmitting the source copy to the target mobile device in a push operation from the server if the source copy does not match the configuration scheme of the target mobile device.

US patent application 2006/217113 A1 discloses a communication device, which comprises: communication circuitry that enables wireless communication with at least one remote server via a wireless network; at least one memory containing machine readable code executable by a processor; at least one processor operably coupled to the communication circuitry and the at least one memory; wherein the machine readable code enables access, in separate device management sessions, to a plurality of management objects in accordance with an Open Mobile Alliance (OMA) device management (DM) protocol; and wherein the machine readable code also enables access, in a single device management session, to a device profile comprising the plurality of management objects,

US patent application 2007/169093 A1 discloses a mobile device management platform in a network for managing a mobile device communicatively coupled to the mobile device management platform, the mobile device management platform comprising: a centralized device management system; a device registry and a subscriber registry that are constantly updated as new mobile devices and subscribers are added to the network; and the centralized device management system conducting device management activities on the mobile device based on entries in at least one of the device registry and the subscriber registry.

US patent application 2008/046583 A1 discloses a system supporting device management for a plurality of electronic devices using point-to-point and broadcast transport protocols, the system comprising: at least one server that transmits to one of the plurality of electronic devices using a point-to-point transport protocol according to a device management protocol standard, first information that enables access to the at least one server by the one of the plurality of electronic devices, and second information that enables the one of the plurality of electronic devices to receive device management information using the broadcast transport protocol; and wherein the point-to-point transport protocol is used to communicate at least result information sent by the one of the plurality of electronic devices to the at least one server.

US patent application 2008/183800 A1 discloses a computer-implemented device management system, comprising; a proxy component for asynchronously accessing arbitrary services of a backend system on behalf of a mobile client; and a driver component that includes drivers for accessing the arbitrary services for processing as arbitrary tasks associated with state of the mobile client.

### SUMMARY OF THE INVENTION

Embodiments of the present invention provide a DM method, a DM apparatus, and a DM system to solve the problem in the prior art that lots of repeated management data is transmitted via an external interface of a gateway device connected to a DMS and link congestion of the external interface of the gateway device is caused.

To achieve the foregoing objectives, the embodiments of the present invention adopt the following technical solutions:

In an aspect, an embodiment of the present invention provides a DM method, which includes:
receiving a DM instruction;
parsing the DM instruction to be used for managing at least two terminal devices, in which management data, used for managing the at least two terminal devices, indicated in the DM instruction, is the same;
obtaining the management data indicated in the DM instruction only once; and
delivering the obtained management data to the at least two terminal devices so that the at least two terminal devices perform DM according to the management data, which comprises:
   allocating a local link identifier to the obtained management data;
   delivering the DM instruction that carries the local link identifier of the management data to the at least two terminal, devices; and
   delivering the management data to the at least two terminal devices if the at least two terminal devices request obtaining the management data according to the local link identifier of the received management data.

In another aspect, an embodiment of the present invention provides a Device Management Proxy (DMP), which includes:
an instruction receiving unit, configured to receive a DM instruction;
an instruction parsing unit, configured to parse the DM instruction to be used for managing at least two terminal devices, in which management data, used for managing the at least two terminal devices, indicated in the DM instruction is the same;
a data obtaining unit, configured to obtain the management data indicated in the DM instruction only once; and
an information delivering unit, configured to deliver the obtained management data to the at least two terminal devices so that the at least two terminal devices perform DM according to the management data, wherein the information delivering unit further comprises:
   a local identifier configuring subunit, configured to allocate a local link identifier to the obtained management data; and
   an instruction delivering subunit, configured to deliver the DM instruction that carries the local link identifier of the management data to the at least two terminal devices; and
   a data delivering subunit, configured to deliver the management data to the at least two terminal devices so that the at least two terminal devices perform DM according to the DM instruction, if the at least two terminal devices request obtaining the management data according to the local link identifier of the received management data.

In still another aspect, an embodiment of the present invention provides a DM system, which includes:
a DMP, configured to: receive a DM instruction sent by a DMS; parse the DM instruction to be used for managing at least two terminal devices, in which management data, used for managing the at least two terminal devices, indicated in the DM instruction is the same; obtain the management data indicated in the DM instruction only once; and deliver the obtained management data to the at least two terminal devices so that the at least two terminal devices perform DM according to the management data, wherein the DMP is further configured to:
   allocating a local link identifier to the obtained management data;
   delivering the DM instruction that carries the local link identifier of the management data to the at least two terminal devices; and
   delivering the management data to the at least two terminal devices if the at least two terminal devices request obtaining the management data according to the local link identifier of the received management data;
   a terminal device, configured to receive the management data delivered by the DMP; and
   the DMS, configured to deliver the DM instruction to the DMP, in which the DM instruction is used for managing the at least two terminal devices, and the management data indicated in the DM instruction is the same.

With the DM method, the DM apparatus, and the DM system according to the embodiments of the present invention, if the received DM instruction is parsed to judge that the DM instruction is used for managing at least two terminal devices, and management data indicated in the DM instruction is the same, the management data indicated in the DM instruction is obtained only once, thereby greatly saving the interface resources for obtaining the management data indicated in the DM instruction, reducing the adverse impact on the user service experience, and relieving the load on the system for receiving the management data.

### BRIEF DESCRIPTION OF THE DRAWINGS

FIG. 1 is a flowchart of a DM method according to an embodiment of the present invention;
FIG. 2 is a schematic structure diagram of a DMP according to an embodiment of the present invention;
FIG. 3 is a schematic structure diagram of a DM system according to an embodiment of the present invention;
FIG. 4 is a flowchart of a DM method according to an embodiment of the present invention;
FIG. 5 is a flowchart of negotiating and configuring a proxy DM relationship between a DMP and each terminal device according to an embodiment of the present invention;
FIGs. 6A and 6B are DM flowcharts according to embodiments of the present invention;
FIG. 7 is another DM flowchart according to an embodiment of the present invention; and
FIG.8 is still another DM flowchart according to an embodiment of the present invention.

### DETAILED DESCRIPTION OF THE EMBODIMENTS

The following describes a DM method, a DM apparatus, and a DM system according to the embodiments of the present invention in detail with reference to accompanying drawings.

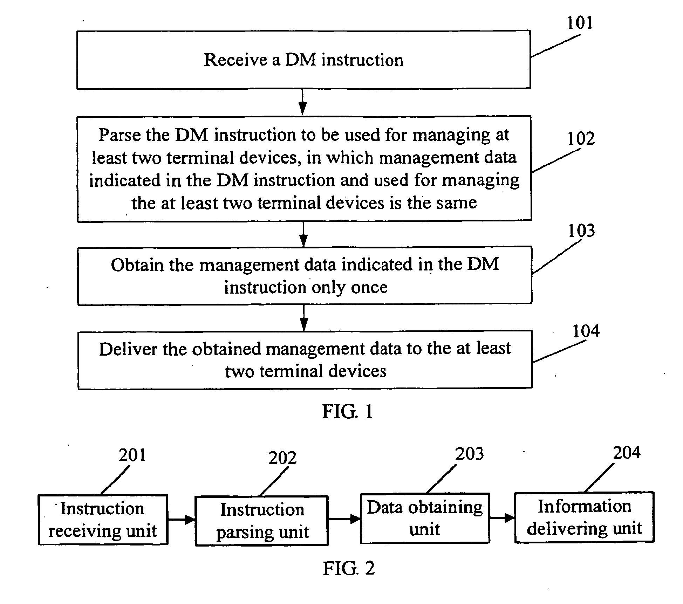

FIG. 1 shows a DM method according to an embodiment of the present invention. The method includes the following steps:
Step 101: Receive a DM instruction.

Specifically, a DMP receives the DM instruction sent by a DMS. The DM instruction may carry different information as required. Examples of the information are: a management data link for managing at least two terminal devices respectively; a management data link identifier for managing at least two terminal devices and a management data identifier for managing at least two terminal devices; management data for managing a first terminal device and at least one management data link identifier for managing other terminal device(s); management data for managing the first terminal device and a management data identifier for managing the first terminal device, at least one management data link identifier for managing other terminal device(s) and a management data identifier for managing other terminal device(s); or, one copy of management data and DM indication information.

It should be noted that, the information in the DM instruction may be sent by the DMS to the DMP in the form of at least one DM message. If the information of the DM instruction is sent by the DMS to the DMP through one DM message, the DM message is used for managing at least two terminal devices; if the information of the DM instruction is sent by the DMS to the DMP through at least two DM messages, the DM messages are used for managing at least one terminal device.

Step 102: Parse the DM instruction to be used for managing at least two terminal devices, in which management data, used for managing the at least two terminal devices, indicated in the DM instruction is the same.

In step 102, the DMP performs parsing and judging according to the received DM instruction; and performs different parsing processing according to the received DM instruction. The scenarios of parsing are as follows:

Scenario 1: If the DM instruction carries management data link identifiers for managing at least two terminal devices, the DM instruction is parsed to be used for managing at least two terminal devices and that the management data link identifiers for managing at least two terminal devices are the same.

Scenario 2: If the DM instruction carries management data link identifiers for managing at least two terminal devices and carries management data identifiers for managing at least two terminal devices, the DM instruction is parsed to be used for managing at least two terminal devices and the management data link identifiers for managing at least two terminal devices or the management data identifiers in the DM instruction are the same.

Scenario 3: If the DM instruction carries management data for managing a first terminal device and at least one management data link identifier for managing other terminal devices, the DM instruction is parsed to be used for managing at least two terminal devices and the management data link identifier for managing other terminal devices is linked to the management data of the first terminal device.

Scenario 4: If the DM instruction carries management data for managing a first terminal device and a management data identifier of the first terminal device, at least one management data link identifier for managing other terminal devices and a management data identifier for managing other terminal devices, the DM instruction is parsed to be used for managing at least two terminal devices, and the management data link identifier for managing at least one other terminal device in the DM instruction is linked to the management data of the first terminal device, or the management data identifier for managing the at least one other terminal device in the DM instruction is the same as the management data identifier of the first terminal device.

Scenario 5: If the DM instruction carries one copy of management data and DM indication information, the DM instruction is parsed to be used for managing at least two terminal devices and the DM indication information indicates the management data is used for managing the at least two terminal devices.

It should be noted that, the process of the DMP performing instruction parsing on the received DM instruction may be understood as follows: The DMP receives and parses a DM instruction, judges the DM instruction, and stores the judgment result and the obtained management data locally; afterward, the DMP receives and parses a next DM instruction, and judges the next DM instruction, where the parse and judgment may be made not only with respect to the information carried in the DM instruction, but also with respect to the judgment result previously stored locally by the DMP and the previously obtained management data; if the management data indicated in the next received DM instruction is the same as the management data previously stored locally by the DMP, the DMP obtains the locally stored management data.

Step 103: Obtain the management data indicated in the DM instruction only once.

Step 104: Deliver the obtained management data to the at least two terminal devices so that the at least two terminal devices perform DM according to the management data. Here, it can be understood that, the terminal device(s) may regard the DMP as a DMS, and the DMP delivers the obtained management data to the terminal device(s) required to perform a DM operation.

It should be further noted that, when the DMP needs to store the obtained management data in a preset storage location of the DMP, the step of delivering the DM instruction and the obtained management data to the at least two terminal devices further includes:
allocating a local link identifier to the obtained management data;
delivering the DM instruction that carries the local link identifier of the management data to the at least two terminal devices; and
delivering the management data to the at least two terminal devices, if the at least two terminal devices request obtaining the management data according to the local link identifier of the received management data, so that the at least two terminal devices perform DM according to the DM instruction.

When the DMP needs to store the obtained management data onto a corresponding location of MO of the terminal device in a local management tree of the DMP, the step of delivering the obtained management data to the at least two terminal devices so that the at least two terminal devices perform DM according to the management data further includes:
delivering the DM instruction that carries the management data to the at least two terminal devices separately, so that the at least two terminal devices perform DM according to the DM instruction.

FIG. 2 shows a DMP according to an embodiment of the present invention. The DMP includes:
an instruction receiving unit 201, configured to receive a DM instruction;
an instruction parsing unit 202, configured to parse the DM instruction to be used for managing at least two terminal devices, in which management data, used for managing the at least two terminal devices, indicated in the DM instruction is the same;
a data obtaining unit 203, configured to obtain the management data indicated in the DM instruction only once; and
an information delivering unit 204, configured to deliver the obtained management data to the at least two terminal devices so that the at least two terminal devices perform DM according to the management data.

The instruction parsing unit 202 may make different judgment according to the information carried in the DM instruction; if the DM instruction carries management data link identifiers for managing at least two terminal devices, the instruction parsing unit parses the DM instruction to be used for managing at least two terminal devices and that the management data link identifiers for managing at least two terminal devices are the same.

Alternatively, if the DM instruction carries management data link identifiers for managing at least two terminal devices and management data identifiers for managing at least two terminal devices, the instruction parsing unit parses the DM instruction to be used for managing at least two terminal devices and that the management data link identifiers for managing at least two terminal devices or the management data identifiers for managing at least two terminal devices in the DM instruction are the same.

Alternatively, if the DM instruction carries management data for managing a first terminal device and at least one management data link identifier for managing other terminal device(s), the instruction parsing unit parses the DM instruction to be used for managing at least two terminal devices and that the management data link identifier for managing other terminal device(s) is linked to the management data of the first terminal device.

Alternatively, if the DM instruction carries management data for managing a first terminal device and a management data identifier for managing the first terminal device, at least one management data link identifier for managing other terminal device(s) and a management data identifier for managing other terminal device(s), the instruction parsing unit parses the DM instruction to be used for managing at least two terminal devices, and that the management data link identifier for managing at least one other terminal device in the DM instruction is linked to the management data for managing the first terminal device, or the management data identifier for managing at least one other terminal device in the DM instruction is the same as the management data identifier for managing the first terminal device.

Alternatively, if the DM instruction carries one copy of management data and DM indication information, the instruction parsing unit parses the DM instruction to be used for managing at least two terminal devices and that the DM indication information indicates the management data is used for managing the at least two terminal devices.

It should be noted that, when the DMP with the foregoing instruction parsing unit needs to store the obtained management data in a preset storage location of the DMP, the information delivering unit 204 may further include:
a local identifier configuring subunit, configured to allocate a local link identifier to the obtained management data;
an instruction delivering subunit, configured to deliver the DM instruction that carries the local link identifier of the management data to the at least two terminal devices; and
a data delivering subunit, configured to deliver the management data to the at least two terminal devices if the at least two terminal devices request obtaining the management data according to the local link identifier of the received management data, so that the at least two terminal devices perform DM according to the DM instruction.

When the DMP needs to store the obtained management data onto a corresponding location of MO of the terminal device in a local management tree of the DMP, the information delivering unit further includes:
an information delivering subunit, configured to deliver the DM instruction that carries the management data to the at least two terminal devices separately so that the at least two terminal devices perform DM according to the DM instruction.

It should be noted that, the DMP may further include:
an authorization message receiving unit, configured to receive authorization message(s) of the at least two terminal devices, where the authorization message(s) carries (carry) the identifier information of the DMS to be accessed by the at least two terminal devices;
an authorization message parsing unit, configured to parse the authorization message(s), and judge whether the DMS is supported according to the identifier information of the DMS;
a request message sending unit, configured to send a proxy DM request to the at least two terminal devices if the DMS is supported; and
an authorization command receiving unit, configured to receive DM authorization command(s) sent by the at least two terminal devices.

It should be further noted that, the DMP may further include:
an account information configuring unit, configured to allocate account information to the at least two terminal devices; and
a session managing unit, configured to: set up a DM sessions with the at least two terminal devices according to the allocated account information, for example, obtain the MO data information of the at least two terminal devices through the DM session and map the MO data information to a local location; or deliver the obtained management data to the at least two terminal devices through the DM sessions.

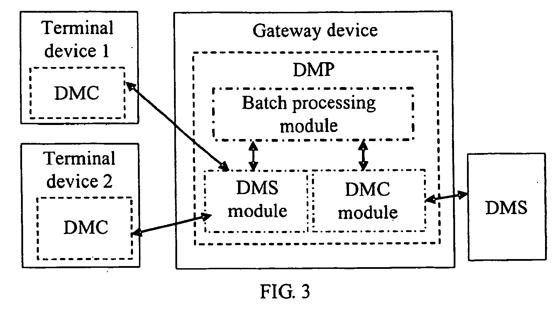

FIG 3 shows a DM system according to an embodiment of the present invention, which includes:
a DMP, configured to: receive a DM instruction sent by a DMS; parse the DM instruction to be used for managing at least two terminal devices, and that management data, used for managing the at least two terminal devices, indicated in the DM instruction is the same; obtain the management data indicated in the DM instruction only once; and deliver the obtained management data to the at least two terminal devices so that the at least two terminal devices perform DM according to the management data;
terminal devices, configured to: receive the management data delivered by the DMP, authorize the DMP to perform proxy management, and exchange information with the DMP through the account information allocated by the DMP to the terminal devices; and
the DMS, configured to: deliver a DM instruction to the DMP, where the DM instruction is used for managing at least two terminal devices and management data indicated in the DM instruction is the same; receive a DM session setup message sent by the DMP, and obtain MO data information of the at least two terminal devices according to the DM session setup message; and deliver the DM instruction according to the received session message and the obtained MO data information.

The DMP includes:
a DMC module, configured to receive a DM instruction sent by the DMS and exchange information with the DMS;
a batch processing module, configured to: parse the DM instruction to be used for managing at least two terminal devices, and that management data, used for managing the at least two terminal devices, indicated in the DM instruction is the same; and obtain the management data indicated in the DM instruction only once; and
a DMS module, configured to: deliver the obtained management data to the at least two terminal devices so that the at least two terminal devices perform DM according to the management data; and exchange information with the at least two terminal devices.

It should be noted that, in this embodiment, a DMP is added to the gateway device so that the DMS can combine transmission of signaling and data when performing the same DM operation on multiple terminal devices.

On the interface between the gateway device and the network-side DMS, the DMP in the gateway device sets up a DM session with the network-side DMS through a DMC module, receives the DM instruction(s) specific to multiple terminal devices sent by the network-side DMS, and returns a command execution result to the network-side DMS. Through the interface between the gateway device and each terminal device, the DMP in the gateway device sets up DM sessions with the DMC in each terminal device through a DMS module, delivers the corresponding DM instruction to the DMC on each terminal device on behalf of the network-side DMS, and receives the result of performing the DM operation on the terminal device. When the DMP receives the DM instructions specific to multiple terminal devices from the network-side DMS, the batch processing module in the DMP first parses the DM instruction(s) to judge whether the DM instruction(s) is(are) the same, for example, judge whether the same management data needs to be downloaded; if the same management data needs to be downloaded, the batch processing module combines the same DM instructions, instructs the DMC module in the gateway device to obtain only one copy of management data, and then instructs the DMS module to distribute the same copy of management data to DMCs in multiple terminal devices.

It should be further noted that, the DMP in the present invention can be deployed not only in a gateway device, but also in a server or functional entity between the terminal device and the network-side DMS. Therefore, unless otherwise specified herein, the DMP is described as an independent logical functional entity, and the physical device where the DMP is practically deployed is not limited.

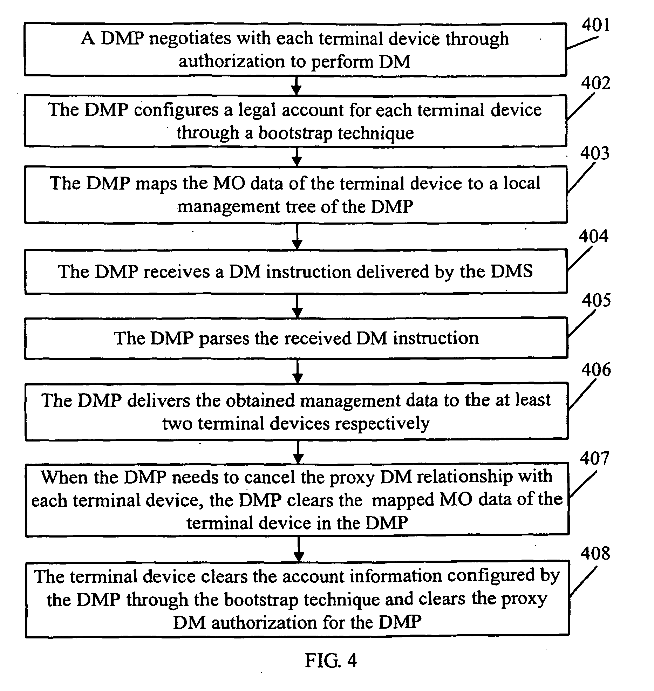

FIG. 4 shows a DM method according to an embodiment of the present invention. The basic process of the method includes the following steps:

Step 401: A DMP negotiates with each terminal device through authorization to perform DM. The negotiation process includes the following step: The DMP judges whether the DMP supports a DMS accessed by the terminal devices, and whether the terminal devices are willing to authorize the DMP to perform proxy management.

Step 402: The DMP configures a legal account for each terminal device through a bootstrap technique. The account is used for setting up a DM session between the DMP and the terminal device.

Step 403: The DMP maps the MO data of the terminal device to a local management tree of the DMP.

Step 404: The DMP receives a DM instruction delivered by the DMS.

Step 405: The DMP parses the received DM instruction to be used for managing at least two terminal devices, in which management data indicated in the DM instruction is the same; and obtains the management data indicated in the DM instruction only once.

Step 406: The DMP delivers the obtained management data to the at least two terminal devices separately, namely, the DMP processes the downloaded DM data locally and forwards the DM data to the at least two terminal devices.

Step 407: When the DMP needs to cancel the proxy DM relationship with each terminal device, the DMP clears the mapped MO data of the terminal device in the DMP. The mapped MO data of the terminal device in the DMP is the MO data information of the terminal device that needs to cancel the DM proxying relationship in the local management tree.

Step 408: The terminal device clears the account information configured by the DMP through the bootstrap technique and clears the proxy DM authorization for the DMP.

Step 407 and step 408 may be performed selectively according to practical situations.

It should be noted that, after the terminal device is separated from the gateway device where the DMP is located, the terminal device may choose whether to keep or clear the DM account information configured by the DMP through the bootstrap technique, and whether to keep or cancel the authorization for the DMP, and the DMP may choose whether to keep or clear the locally mapped MO data information of the terminal, which is not limited by the technical solution of the present invention.

The following uses specific embodiments to describe how the DMP negotiates and configures the proxy DM relationship with each terminal device and describe the DM process in detail.

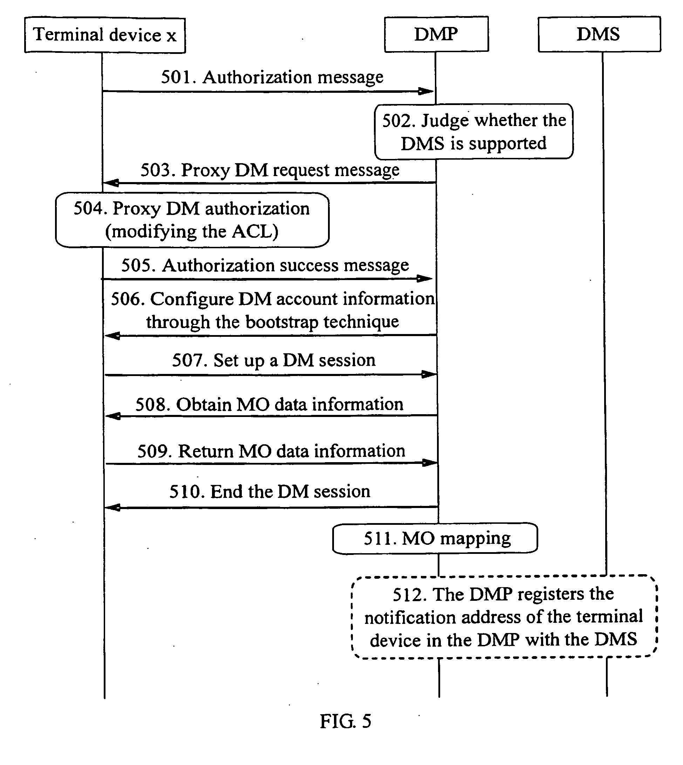

To set up a DM proxying relationship between the DMP and each terminal device, on one hand, the DMP needs to be capable of accessing the DMS on behalf of multiple terminal devices, and on the other hand, the DMP needs to be capable of performing DM operations on multiple terminal devices on behalf of the DMS. That is, the DMP needs to be authorized to access the MO data on all terminal devices, and meanwhile needs to configure DM account information available for each terminal device to access the DMP. FIG. 5 shows a process of negotiating and configuring a proxy DM relationship between a DMP and each terminal device according to an embodiment of the present invention.

For example, assuming that DM account information is pre-configured for multiple terminal devices for accessing the same DMS, when each terminal device accesses an external network separately, the terminal devices may use the DM account information to access the DMS and obtain the DM service. In this embodiment, when the terminal devices access the external network through a common gateway device or a common another server, the terminal devices can set up a proxy DM relationship with the DMP in the gateway device or the other server, and then obtain the DM service provided by the DMS through the DMP. The detailed implementation procedure is as follows:

Step 501: Terminal device x sends an authorization message to the DMP. The authorization message may indicate that the DMP supports a standard DM protocol, and may provide the ID of the DMS (DMS-ID) to be accessed by terminal device x. When multiple DMSs need to be accessed, the authorization message may provide a list of DMS-IDs.

Step 502: The DMP judges whether the DMP comprises DM account information for accessing the DMS. If such DM account information for accessing the DMS exists, the DMP performs step 503; if no such DM account information for accessing the DMS exists, the DMP returns an error response. If multiple DMSs need to be accessed but the DMP supports only a part of the DMSs, the DMP performs step 503 and returns the IDs of DMSs not supported by the DMP to terminal device x.

It should be noted that, for the DMSs not supported by the DMP, terminal device x may obtain the DM service by accessing the DMS separately with reference to a DM protocol.

Step 503: The DMP sends a proxy DM request message to terminal device x, requesting performing proxy DM for terminal device x. The proxy DM request message provides a DMP-ID which specifies the DMP itself as a proxy DMS so that terminal device x authorizes the DMP.

Step 504: Terminal device x authorizes the DMP to perform proxy DM according to the confirmation of the user, for example, adds the DMP-ID to an Access Control List (ACL) of the relevant MOs, and configures the DMP with access right to add, delete, and modify the MO data.

Step 505: Terminal device x returns an authorization success message to the DMP.

Step 506: The DMP configures DM account information for terminal device x through the bootstrap technique. The DM account information is used for accessing the DMP. Specifically, based on the DM bootstrap technique, the DM account information may be bootstrapped onto terminal device x through an Object Exchange (OBEX) protocol on a local connection between the DMP and terminal device x.

Step 507: Terminal device x sets up a DM session with the DMP by using the DM account information configured through the bootstrap technique in step 506.

Step 508: In the session process, the DMP obtains the relevant MO data information on terminal device x. For example, through a <Get> command, the DMP can obtain the complete management tree structure on terminal device x and the detailed data of MOs in the management tree.

Step 509: Terminal device x returns its MO data information to the DMP, for example, in the format of a Device Management-Tree and Description Serialization (DM-TNDS) document.

Step 510: The DMP terminates the DM session with terminal device x.

Step 511: The DMP maps the MO data information of terminal device x obtained in step 509 to the local management tree of the DMP, for example, adds the MO data information as a management subtree under a branch node in the DMP management tree. Depending on the extent of detail of the MO data information content obtained in step 509, the mapped MO data information of terminal device x may be exhaustive or partial, or may only be empty MO root nodes that include no specific value information.

Step 512: Optionally, the DMP registers the notification address of terminal device x in the DMP with the DMS, and therefore, when the DMS needs to perform DM operations on terminal device x, the DMS sends a DM notification message to the DMP first, and then the DMP performs the proxy DM function.

To describe the DM process in step 402 more clearly, the following gives three specific examples for detailed description. It is assumed that the DMS needs to perform the same DM operation on multiple terminal devices through the DMP, and the DMS performs the same software upgrade on terminal device 1 and terminal device 2 through the DMP.

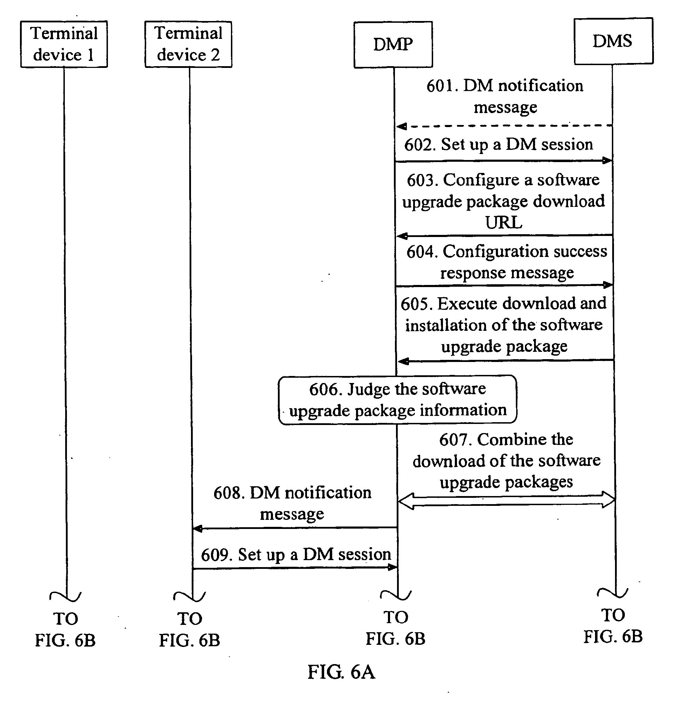

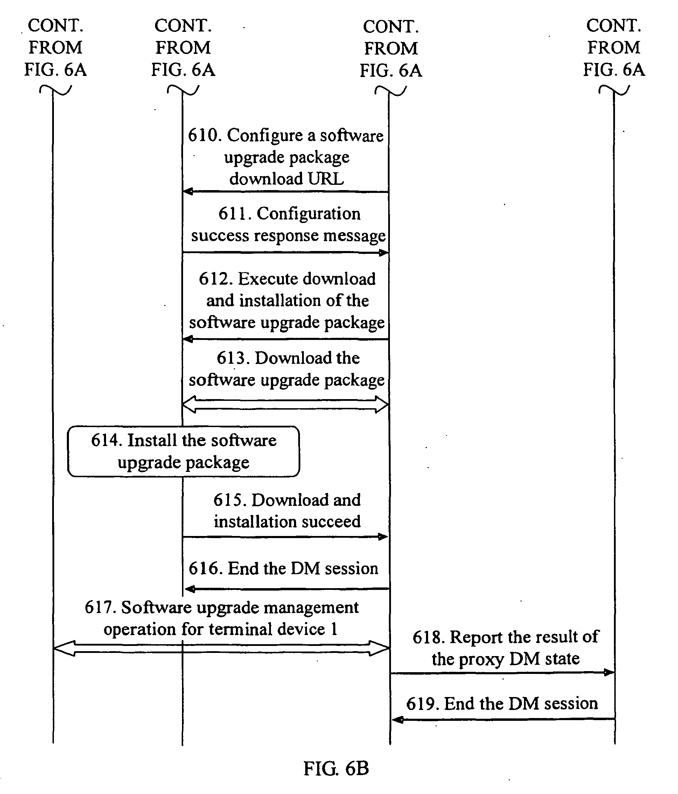

FIGs. 6A and 6B show a DM process according to an embodiment of the present invention. In this process, the DMS sends management data (namely, a software upgrade package) in "indirect delivery" mode. Therefore, in the DM instruction, the DMS does not provide the software upgrade package directly, but provides a Uniform Resource Locator (URL) of the software upgrade package only. The receiver of the DM instruction obtains the software upgrade package according to the URL. In this embodiment, the receiver of the DM instruction is the DMP. The DMP parses the DM instruction of the DMS to judge that the same software upgrade package needs to be delivered to terminal device 1 and terminal device 2. Therefore, the DMP downloads the software upgrade package from the URL only once, thereby saving the link resources of the external interface of the DMP. The detailed implementation procedure is as follows:

Step 601: If the DMS judges it is necessary to perform a DM operation of software upgrade on terminal device 1 and terminal device 2 according to a request of the DMA, the DMS instructs the DMP to set up a DM session with the DMS by sending a DM notification message to the DMP. This step is performed selectively according to practical situations.

Step 602: The DMP requests the DMS to set up a DM session. In this process, the DMP provides account information for the DMS first so that the DMS can authenticate the legal identity of the DMP. The DMP may also provide the MO data information of the terminal device(s) locally mapped by the DMP for the DMS.

Step 603: According to the MO data information of the terminal device(s) maintained by the DMS or provided by the DMP, the DMS judges to perform the DM operation of software upgrade on terminal device 1 and terminal device 2. Therefore, the DMS sends a DM instruction for configuring a software upgrade package download URL to the DMP, where the software upgrade package download URL is a link identifier of the management data. The DM instruction may have the following content based on the existing DM protocol:

```
        <Replace>
          ...
          <Item>
             <Target>
               <LocURI>./PNE 1 /SCM/Download/Package 123/PkgID</LocURI>
             </Target>
             <Data>pkg1</Data>
          </Item>
          <Item>
             <Target>
               <LocURI>./PNE1/SCM/Download/Package 123/PkgURL</LocURI>
             </Target>
             <Data> ftp://example.org/pkg1</Data>
          </Item>
          <Item>
             <Target>
               <LocURI>./PNE2/SCM/Download/Package456/PkgID</LocURI>
             </Target>
             <Data>pkg 1</Data>
          </Item>
          <Item>
             <Target>
               <LocURI>./PNE2/SCM/Download/Package456/PkgURL</LocUR1>
            </Target>
            <Data> ftp://example.org/pkg1</Data>
          </Item>
          ...
          </Replace>
```

The <Replace> command is used for instructing the DMP to replace the mapped MO data information of the terminal device(s), where the replaced data item is described by the <Item> element; the <Target>/<LocURI> subelement indicates the destination location of the replaced data item, namely, the location of the mapped node of the MO in the management tree in DMP; and the <Data> subelement indicates the specific content of the replaced data item. Specifically, the destination location ./PNE1/SCM/Download/Package123/PkgID and the destination location ./PNE2/SCM/Download/Package456/PkgID are used for configuring the unique identifier of the software upgrade package of terminal device 1 and terminal device 2 respectively, namely, configuring the management data identifiers, which are both pkg1 in this example; the destination location ./PNE1/SCM/Download/Package123/PkgURL and the destination location ./PNE2/SCM/Download/Package456/PkgURL are used for configuring the download URL of the software upgrade package of terminal device 1 and terminal device 2 respectively, namely, configuring the management data link identifiers, which are both ftp://example.org/pkg1 in this example. The DM instruction may further include other necessary operation instructions. For example, when the mapped MO node does not exist in the destination location, the DMS needs to execute an <Add> command to create the node, which can be implemented with reference to the DM protocol, and details are not described herein again.

Step 604: The DMP configures the mapped MO data information of the corresponding terminal device in the management tree in DMP according to the DM instruction in step 603, and then returns a configuration success response message to the DMS.

Step 605: The DMS sends a DM instruction for executing "download and installation" of the software upgrade package of terminal device 1 and terminal device 2 to the DMP. The following is an example of the content of the DM instruction based on the DM protocol:

```
       <Exec>
          ...
             <Item>
               <Target>
               <LocURI>./PNE1/SCM/Download/Package 123/Operations/DownloadInstall
               </LocURI>
            </Target>
          </Item>
          <Item>
            <Target>
               <LocURI>./PNE2/SCM/Download/Package456/Operations/DownloadInstall
               </LocURI>
            </Target>
          </Item>
       </Exec>
```

The <Exec> command is used for instructing the DMP to execute the specific DM operation which is described by the <Item> element; the <Target>/<LocURI> subelement indicates the location of the MO node corresponding to the operation, and, in this embodiment, the location is the nodes mapped by the DMP and used by terminal device 1 and terminal device 2 for the "download and installation" operation. The DM instruction may further include other necessary operation instructions, which can be implemented with reference to the DM protocol, and details are not described herein again.

Step 606: The DMP judges that the two software upgrade packages are the same according to the software upgrade package information configured by the DMS for upgrading software of terminal device 1 and terminal device 2, namely, according to the unique identifier and/or URL link identifier of the software upgrade package. Specifically, if the two software upgrade packages have the same unique identifier (namely, pkg1) or the same URL (namely, ftp://example.org/pkg1) used for downloading the two software upgrade packages, the two software upgrade packages are the same.

Step 607: The DMP combines the download procedures of the foregoing two software upgrade packages, that is, the download procedure is executed only once and no software upgrade package is downloaded repetitively. In this embodiment, assuming that the download URL of the software upgrade packages points to the DMS, the DMP downloads and obtains the software upgrade packages from the DMS. In practical deployment, the URL may point to another server, and the DMP may download and obtain the software upgrade packages from the another server.

Step 608: To implement the DM operation of software upgrade on terminal device 2, the DMP sends a DM notification message to terminal device 2 so as to instruct terminal device 2 to set up a DM session with the DMP.

Step 609: Terminal device 2 requests the DMP to set up a DM session by sending a DM session setup request message that carries account information configured for terminal device 2 by the DMP through the bootstrap technique, and the account information configured for terminal device 2 by the DMP is used by the DMP for authenticating the legal identity of terminal device 2.

Steps 610 to 611: Similar to steps 603 to 604, the DMP sends a DM instruction to terminal device 2 to configure the download URL of the software upgrade package. The following is an example of the content of the DM instruction based on the DM protocol:

```
       <Replace>
          ...
          <Item>
            <Target>
               <LocURI>./SCM/Download/Package123/PkgID</LocURI>
            </Target>
            <Data>pkg 1 </Data>
          </Item>
          <Item>
            <Target>
               <LocURI>./SCM/Download/Package 123/PkgURL</LocURI>
            </Target>
            <Data> ftp://dmp.example.org/pkg1</Data>
          </Item>
       </Replace >
```

The DMP modifies the URL of the software upgrade package to be downloaded by terminal device 2 to ftp://dmp.example.org/pkg1 which is the local link address of the DMP.

Step 612: Similar to step 605, the DMP sends a DM instruction for executing "download and installation" of the software upgrade package to terminal device 2.

Step 613: Terminal device 2 downloads the software upgrade package from the DMP according to the URL of the software upgrade package configured in step 611 or according to the management data identifier, namely, the unique identifier of the software upgrade package.

Steps 614 to 616: After installing the downloaded software upgrade package, terminal device 2 returns a download and installation success response message to the DMP, and the DMP ends the DM session with terminal device 2.

Step 617: Similar to steps 608 to 616, the DMP finishes the software upgrade management operation for terminal device 1.

Step 618: The DMP reports the result of the proxy DM state for terminal device 1 and the result of the proxy DM state for terminal device 2 to the DMS, namely, reports success of downloading and installing the software upgrade package.

Step 619: The DMS ends the DM session with the DMP, and finishes DM for terminal device 1 and terminal device 2.

It should be noted that:

The DMP may report the result of the DM state for terminal device 1 and the result of the DM state for terminal device 2 in an "asynchronous" reporting mode specified in the existing DM protocol. In this case, after step 607, the DMS may perform step 619 immediately to end the DM session with the DMP; after step 617, the DMP may set up a new DM session with the DMS to report the result of the DM state for terminal device 1 and the result of the DM state for terminal device 2, and details are not described herein again.

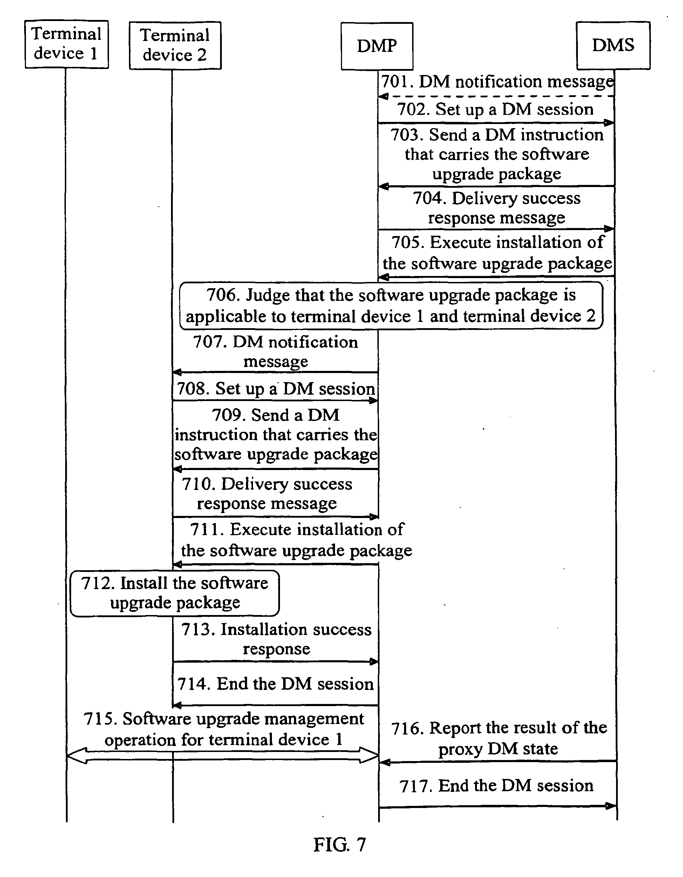

It should be further noted that, in steps 608 to 617, for the software upgrade management operation performed by the DMP on terminal device 1 and terminal device 2, the software upgrade packages may be delivered to terminal device 1 and terminal device 2 in the direct delivery mode in the DM protocol, and specifically, reference is made to steps 707 to 714 in the specific embodiment shown in FIG 7.

FIG. 7 shows a DM process according to an embodiment of the present invention. In this process, the DMS chooses to send the software upgrade package in a "direct delivery" mode. That is, the DMS sends a DM instruction that carries the software upgrade package to the DMP, where the DM instruction indicates that the software upgrade package is used to install and upgrade multiple target terminal devices (namely, terminal device 1 and terminal device 2). The DMP directly delivers the software upgrade package to terminal device 1 and terminal device 2 respectively according to the instruction, and instructs terminal device 1 and terminal device 2 to install the software upgrade package. This procedure includes the following steps:

Steps 701 to 702: Same as steps 601 to 602, and details are not described herein again.

Step 703: According to the MO data information of the terminal device maintained by the DMS or provided by the DMP, the DMS judges it is necessary to perform the same DM operation of software upgrade on terminal device 1 and terminal device 2. Therefore, the DMS sends a DM instruction that carries the software upgrade package to the DMP. The following is an example of the content of the DM instruction based on the DM protocol:

```
       <Replace>
          ...
          <Item>
            <Target>
               <LocURI>./PNE 1 /SCM/Inventory/Del ivered/Package 123/PkgID</LocURI>
               <LocURI>./PNE2/SCM/Inventory/Delivere/Package456/PkgID</LocURI>
            </Target>
            <Data>pkg 1 </Data>
          </Item>
          <Item>
            <Target>
               <LocURI>./PNE1/SCM/Inventory/Delivered/Package123/Data </LocURI>
               <LocURI>./PNE2/SCM/Inventory/Delivered/Package456/Data </LocURI>
            </Target>
            <Data><!-- Base64-coded package data --><data>
          </Item>
       </Replace>
```

The <Item> element can carry multiple <Target>/<LocURI> subelements (by extending the syntax rule of the DM protocol) to indicate that the same <Data> element in the <Item> element is applicable to multiple destination locations. Specifically, the destination location ./PNE1/SCM/Inventory/Delivered/Package123/PkgID and destination location ./PNE2/SCM/Inventory/Delivered/Package456/PkgID are used for configuring the unique identifier of the software upgrade package of terminal device 1 and terminal device 2 respectively, namely, configuring the management data identifiers, which are both pkg1 in this example; the destination location ./PNE1/SCM/Inventory/Delivered/Package123/Data and destination location ./PNE2/SCM/Inventory/Delivered/Package456/Data are used for storing the software upgrade package instead of the URL of the software upgrade package.

Step 704: The DMP configures the mapped MO data information of the terminal device in the management tree in the DMP according to the DM instruction in step 703, and then returns a delivery success response message to the DMS.

Step 705: The DMS sends a DM instruction for executing "installation" of the software upgrade package of terminal device 1 and terminal device 2 to the DMP. The following is an example of the content of the DM instruction based on the DM protocol:

```
       <Exec>
          <CmdID>5</CmdID>
          <Item>
            <Target>
               <LocURI>./PNE1/SCM/Inventory/Delivered/Package123/Operations/Install
               </LocURI>
               <LocURI>./PNE2/SCM/Inventory/Delivered/Package456/Operations/Install
               </LocURI>
            </Target>
          </Item>
       </Exec>
```

The a "direct delivery" embodiment differs from the "indirect delivery" embodiment in that: The <Target>/<LocURI> subelement indicates the location of the MO node corresponding to the operation, and the location is the nodes mapped by the DMP and used by terminal device 1 and terminal device 2 for the "installation" operation instead of the node used for the "download and installation" operation. Meanwhile, according to the extended syntax rule in step 703, one <Item> element may carry multiple <Target>/<LocURI> destination locations.

Step 706: According to indication of multiple destination locations in the same <Item> element in step 703, the DMP judges that the software upgrade package is applicable to both terminal device 1 and terminal device 2.

It should be noted that, when the DMP judges that the software upgrade package is applicable to both terminal device 1 and terminal device 2, the DMP may replicate the software upgrade package into two copies according to the multiple destination locations indicated in the DM instruction, and allocate the two copies to the mapped MO of terminal device 1 and terminal device 2 in the management tree in DMP respectively. Alternatively, the DMP does not replicate the software upgrade package at the time, but stores it in another local location of the DMP separately.

Steps 707 to 708: Similar to steps 608 to 609 in the foregoing embodiment, and details are not described herein again.

Steps 709 to 710: By using a "direct delivery" method in the DM protocol, the DMP delivers the software upgrade package to terminal device 2, and terminal device 2 returns a delivery success response message. Step 709 differs from step 703 in that: Each <Item> in step 709 has only one <Target>/<LocURI> subelement, which indicates the target MO node location corresponding to terminal device 2.

Steps 711 to 714: Similar to step 705, the DMP sends a DM instruction for executing "installation" of the software upgrade package to terminal device 2. Terminal device 2 installs the software upgrade package and then returns an installation success response to the DMP, and the DMP ends the DM session with terminal device 2.

Step 715. Similar to steps 707 to 714, the DMP finishes the software upgrade management operation for terminal device 1.

Steps 716 to 717. Similar to steps 618 to 619, and details are not described herein again.

It should be noted that:

The DMP may report the result of the DM state for terminal device 1 and the result of the DM state for terminal device 2 in an "asynchronous" reporting mode in the DM protocol. In this case, after step 705, the DMS may perform step 717 immediately to end the DM session with the DMP; after step 715, the DMP may set up a new DM session with the DMS to report the result of the proxy DM state for terminal device 1 and the result of the proxy DM state for terminal device 2.

It should be further noted that:

In steps 707 to 715, for the software upgrade management operation performed by the DMP on terminal device 1 and terminal device 2, the software upgrade packages may be delivered to terminal device 1 and terminal device 2 in the "indirect delivery" mode in the DM protocol, and specifically, reference is made to steps 608 to 617 in the foregoing embodiment.

It should be further noted that: in step 703 and step 705, the DMS may further extend the syntax rule of the DM protocol, and use a wildcard such as "*" in the DM instruction; or use a special management tree node with a wildcard meaning such as "./ALL" to indicate multiple destination locations. For example, the following DM instruction is applied in step 703:

```
<Replace>
          ...
          <Item>
            <Target>
               <LocURI>./*/SCM/Inventory/Delivered/Package123/PkgID</LocURI>
            </Target>
            <Data>pkg1 </data>
          </Item>
          <Item>
             <Target>
               <LocURI>./*/SCM/Inventory/Delivered/Package123/Data </LocURI>
             </Target>
             <Data><!-- Base64-coded package data --></Data>
          </Item>
          ...
       </Replace>
```

"./*" represents the MO root node locations of all terminal devices mapped in the management tree in DMP, and this instruction means that the same software upgrade package (with the identifier of pkg1) is delivered to all terminal devices managed by the DMP. Correspondingly, in step 705, a similar mode may be applied to instruct the DMP to "install" the software upgrade package for all terminal devices.

```
       <Exec>
          <CmdID>5</CmdID>
          <Item>
            <Target>
               <LocURI>./*/SCM/Inventory/Delivered/Package123/Operations/Install
               </LocURI>
            </Target>
          </Item>
       </Exec>
```

In fact, in the solution in this embodiment, the wildcard or the special management tree node with a wildcard meaning may be further used to represent all terminal devices already managed or to be managed by the DMP no matter whether MO data information of the terminal devices is mapped in the DMP beforehand. Therefore, the DMP performs the same DM operation for all terminal devices already managed or to be managed by the DMP.

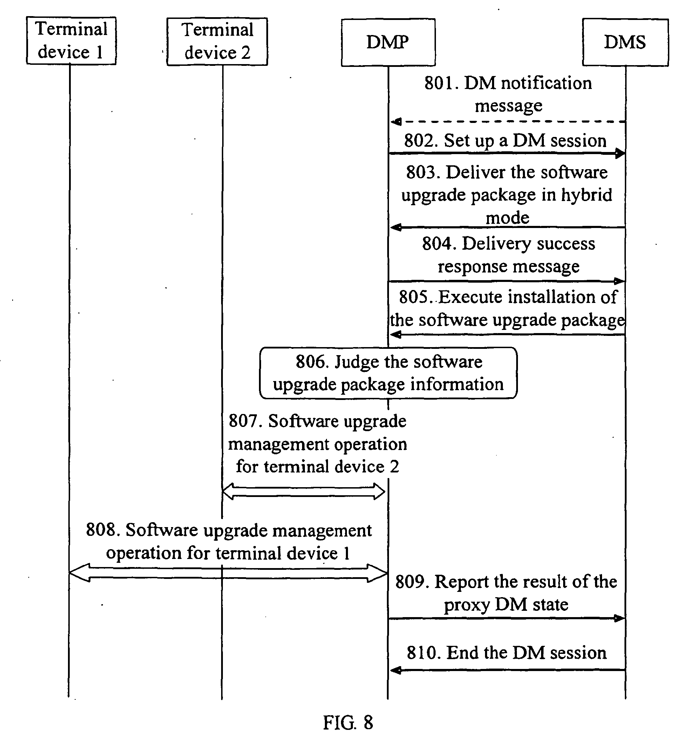

FIG 8 shows a DM process according to an embodiment of the present invention. In this process, the DMS chooses to send the software upgrade package in a "hybrid delivery" mode. The "hybrid delivery" mode in this embodiment differs from the "indirect delivery" and the "direct delivery" in the foregoing embodiments in that: The DMS chooses to send the software upgrade package in the "hybrid delivery" mode, namely, the DMS applies "direct delivery" to one of the terminal devices such as terminal device 1, and sends a DM instruction that carries the software upgrade package to the DMP directly; but applies "indirect delivery" to other terminal devices, and sends a DM instruction that carries only the URL used for downloading the software upgrade package to the DMP. The DMP parses the DM instructions to judge that the indirectly delivered software upgrade package is the same as the directly delivered software upgrade package, and prevents downloading the software upgrade package from the URL repeatedly and saves the link resource of the external interface of the DMP. The procedure for sending the software upgrade package in the "hybrid delivery" mode includes the following steps:

Step 801 to 802: Same as steps 601 to 602, details are not described herein again.

Step 803: If the DMS judges that the software version of the terminal device is excessively low according to the MO data information of the terminal device maintained by the DMS or provided by the DMP, or, if the DMS judges it is necessary to upgrade the software of the terminal device according to the instruction of the DMA, the DMS decides to perform the DM operation of software upgrade on terminal device 1 and terminal device 2. Therefore, the DMS sends to the DMP a DM instruction configured with the software upgrade package download URL. The following is an example of the content of the DM instruction based on the DM protocol:

```
        <Replace>
          ...
          <Item>
             <Target>
               <LocURI>./PNE1/SCM/Inventory/Delivered/Package123/PkgID</LocURI>
             </Target>
             <Data>pkg1</Data>
          </Item>
          <Item>
             <Target>
               <LocURI>./PNE1/SCM/Inventory/Delivered/Package123/Data </LocURI>
             </Target>
             <Data><!-- Base64-coded package data --></Data>
          </Item>
          <Item>
             <Target>
               <LocURI>./PNE2/SCM/Download/Package456/PkgID</LocURI>
             </Target>
             <Data>pkg1 </Data>
          </Item>
          <Item>
             <Target>
               <LocURI>./PNE2/SCM/Download/Package456/PkgURL</LocURI>
             </Target>
             <Data>./PNE1/SCM/Inventory/Delivered/Package 123/Data</Data>
            <!-- or use the URL of the DMS: ftp://example.org/pkg1 -->
          </Item>
          ...
        </Replace>
```

Differentiate from the "direct delivery" mode and "indirect delivery" mode is that: The DMS downloads the same software upgrade package (pkg1) for terminal device 1 and terminal device 2 in the "direct delivery" mode and the "indirect delivery" mode respectively. For terminal device 1, the DMS directly downloads the software upgrade package to the mapped MO destination location of terminal device 1 in the DMP, namely, to ./PNEI/SCM/Inventory/Delivered/Package123/Data; for terminal device 2, the DMS configures the URL used for downloading the software upgrade package to the mapped MO destination location of terminal device 2 in the DMP, namely, to ./PNE2/SCM/Download/Package456/PkgURL. This URL may point to the mapped MO destination location for storing the software upgrade package of terminal device 1 in the DMP, namely, to ./PNE1/SCM/Inventory/Delivered/Package123/Data; or point to the address of the DMS or another server, for example, ftp://example.org/pkg1.

Step 804: The DMP configures the mapped MO data of the terminal devices in the management tree in DMP according to the DM instruction in step 803, and then returns a delivery success response to the DMS.

Step 805: the DMS sends a corresponding DM instruction for installing the software upgrade package to the DMP according to the different delivery modes applied to terminal device 1 and terminal device 2 in step 803,. The following is an example of the content of the DM instruction based on the DM protocol:

```
       <Exec>
          ...
          <Item>
            <Target>
               <LocURI>./PNE1/SCM/Inventory/Delivered/Package123/Operations/Install
               </LocURI>
            </Target>
          </Item>
          <Item>
            <Target>
               <LocURI>./PNE2/SCM/Download/Package456/Operations/DownloadInstall
               </LocURI>
             </Target>
          </Item>
        </Exec>
```

Differentiate from the "direct delivery" mode and "indirect delivery" mode is that: For terminal device 1, the MO node location corresponding to the <Target>/<LocURI> subelement is the node used for the "installation" operation; for terminal device 2, the MO node location corresponding to the <Target>/<LocURI> subelement is the node used for the "download and installation" operation.

Step 806: The DMP judges that the two software upgrade packages are the same according to the software upgrade package information configured by the DMS and used for terminal device 1 and terminal device 2. Specifically, the judgment method is as follows, if the two software upgrade packages have the same unique identifier (namely, pkg1), or, if the URL used for downloading the software upgrade package required by terminal device 2 points to the mapped MO node location for storing the software upgrade package required by terminal device 1 in the DMP, the two software upgrade packages are the same.

Steps 807 to 808: The DMP uses the indirect delivery mode in steps 608 to 616 in the foregoing embodiment or the direct delivery mode in steps 707 to 714 in the foregoing embodiment to finish the software upgrade management operation for terminal device 1 and terminal device 2 respectively.

Steps 809 to 810: Similar to steps 618 to 619 in the foregoing embodiment, and details are not described herein again.

It should be noted that:

The DMP may also report the result of the proxy DM state for terminal device 1 and the result of the proxy DM state for terminal device 2 in an "asynchronous" reporting mode in the DM protocol. In this case, after step 805, the DMS may perform step 810 immediately to end the DM session with the DMP; after step 808, the DMP may set up a new DM session with the DMS to report the result of the DM state for terminal device 1 and the result of the proxy DM state for terminal device 2, and details are not described herein again.

Another DM method is provided in an embodiment of the present invention, and differs from the foregoing DM method in that:

In step 603 and step 605 in the "indirect delivery" DM method embodiment, and in step 803 and step 805 in the "hybrid delivery" DM method embodiment, the DM instruction sent by the DMS to the DMP includes a configuration command, a download-and-install command, and a download command; the DM instruction is transferred by the same DM message in the same DM session in parallel. In fact, in the DM method according to the embodiments of the present invention, the DM instruction may also be sent in series, namely, the DM instruction specific to at least two terminal devices is sent by the DMS through multiple DM messages consecutively, and the DM messages may be sent to the DMP through multiple DM sessions consecutively. In this case, the DMP performs corresponding proxy DM operations for some terminal devices according to the first arrived DM message, and buffers the management data of the at least two terminal devices and the relevant information such as the software upgrade package and the unique identifier of the software upgrade package; the buffered management data and relevant information can be used to parse the subsequently arrived DM message to judge the DM operation for other terminal devices, namely, judge whether the terminal devices to be managed subsequently require the same DM data. If the subsequently arrived DM message needs the management data stored in the DMP, the DM data such as the software upgrade package is not obtained repeatedly, but the buffered DM data is used to finish the proxy DM operation for other terminal devices.

With the DM method, the DM apparatus, and the DM system according to the embodiments of the present invention, if the received DM instruction is parsed to judge that the DM instruction is used for managing at least two terminal devices, and management data indicated in the DM instruction is the same, the management data indicated in the DM instruction is obtained only once, thereby greatly saving the interface resources for obtaining the management data indicated in the DM instruction, reducing the adverse impact on the user service experience, and relieving the load on the system for receiving the management data.

Persons of ordinary skill in the art should understand that all or part of the steps of the method specified in any embodiment above may be implemented by a program instructing relevant hardware. The program may be stored in a computer-readable storage medium such as a Read Only Memory (ROM), a Random Access Memory (RAM), a magnetic disk or an optical disk. When the program runs, the program executes the steps of the method specified in any embodiment above.

The above descriptions are merely exemplary embodiments of the present invention, but not intended to limit the scope of the present invention. Any modifications, variations or replacements that can be easily derived by those skilled in the art shall fall within the scope of the present invention. Therefore, the scope of the present invention is subject to the appended claims.

## Claims

1. A Device Management DM method, comprising:
receiving (101) a DM instruction;
parsing (102) the DM instruction to be used for managing at least two terminal devices, wherein management data, used for managing the at least two terminal devices, indicated in the DM instruction is the same;
obtaining (103) the management data indicated in the DM instruction only once; and
delivering (104) the obtained management data to the at least two terminal devices so that the at least two terminal devices perform DM according to the management data, wherein the step of delivering the obtained management data to the at least two terminal devices comprises:
allocating a local link identifier to the obtained management data;
delivering the DM instruction that carries the local link identifier of the management data to the at least two terminal devices; and
delivering the management data to the at least two terminal devices if the at least two terminal devices request obtaining the management data according to the local link identifier of the received management data.

2. The DM method according to claim 1, wherein:
the step of parsing (102) the DM instruction to be used for managing the at least two terminal devices, wherein the management data, used for managing the at least two terminal devices, indicated in the DM instruction is the same comprises:
if the DM instruction carries management data link identifiers for managing the at least two terminal devices respectively, parsing the DM instruction to be used for managing the at least two terminal devices and the management data link identifiers for managing the at least two terminal devices respectively are the same; or
if the DM instruction carries management data link identifiers for managing the at least two terminal devices respectively and carries management data identifiers for managing the at least two terminal devices respectively, parsing the DM instruction to be used for managing the at least two terminal devices and the management data link identifiers or the management data identifiers in the DM instruction are the same; or
if the DM instruction carries management data for managing a first terminal device and at least one management data link identifier for managing other terminal devices, parsing the DM instruction to be used for managing the at least two terminal devices and the management data link identifier is linked to the management data of the first terminal device; or
if the DM instruction carries the management data for managing the first terminal device and a management data identifier of the first terminal device, at least one management data link identifier for managing other terminal devices and a management data identifier, parsing the DM instruction to be used for managing the at least two terminal devices, and the at least one management data link identifier for managing other terminal devices in the DM instruction is linked to the management data of the first terminal device, or the management data identifier for managing at least one other terminal device in the DM instruction is the same as the management data identifier of the first terminal device; or
if the DM instruction carries one copy of management data and DM indication information, parsing the DM instruction to be used for managing the at least two terminal devices and the DM indication information indicates the management data is used for managing the at least two terminal devices.

3. The DM method according to claim 1 or 2, wherein:
the step of delivering (104) the obtained management data to the at least two terminal devices comprises;
delivering the DM instruction that carries the management data to the at least two terminal devices separately.

4. The DM method according to claim 1 or 2, further comprising:
receiving authorization messages from the at least two terminal devices, wherein the authorization messages carry identifier information of a Device Management Server DMS to be accessed by the at least two terminal devices;
parsing the authorization messages, and judging whether the DMS is supported according to the identifier information of the DMS;
sending a proxy DM request to the at least two terminal devices if the DMS is supported; and
receiving DM authorization commands sent by the at least two terminal devices.

5. The DM method according to claim 1 or 2, further comprising:
allocating account information to the at least two terminal devices; and
setting up DM sessions with the at least two terminal devices according to the allocated account information, obtaining Management Object MO data information of the at least two terminal devices through the DM sessions, and mapping the MO data information to a local location.

6. A Device Management Proxy DMP, comprising:
an instruction receiving unit (201), configured to receive a Device Management (DM) instruction;
an instruction parsing unit (202), configured to parse the DM instruction to be used for managing at least two terminal devices, wherein management data, used for managing the at least two terminal devices, indicated in the DM instruction is the same;
a data obtaining unit (203), configured to obtain the management data indicated in the DM instruction only once; and
an information delivering unit (204), configured to deliver the obtained management data to the at least two terminal devices so that the at least two terminal devices perform DM according to the management data, wherein the information delivering unit (204) further comprises:
a local identifier configuring subunit, configured to allocate a local link identifier to the obtained management data; and
an instruction delivering subunit, configured to deliver the DM instruction that carries the local link identifier of the management data to the at least two terminal devices; and
a data delivering subunit, configured to deliver the management data to the at least two terminal devices so that the at least two terminal devices perform DM according to the DM instruction, if the at least two terminal devices request obtaining the management data according to the local link identifier of the received management data.

7. The DMP according to claim 6, wherein:
the instruction parsing unit (202) is configured to: if the DM instruction carries management data link identifiers for managing the at least two terminal devices respectively, parse the DM instruction to be used for managing the at least two terminal devices, wherein the management data link identifiers for managing the at least two terminal devices respectively are the same; or
if the DM instruction carries management data link identifiers for managing the at least two terminal devices respectively and carries management data identifiers, parse the DM instruction to be used for managing the at least two terminal devices, wherein the management data link identifiers for managing the at least two terminal devices respectively or the management data identifiers are the same; or
if the DM instruction carries management data for managing a first terminal device and at least one management data link identifier for managing other terminal devices, parse the DM instruction to be used for managing the at least two terminal devices, wherein the management data link identifier for managing other terminal devices is linked to the management data of the first terminal device; or
if the DM instruction carries management data for managing the first terminal device and a management data identifier of the first terminal device, at least one management data link identifier for managing other terminal devices and a management data identifier, parse the DM instruction to be used for managing the at least two terminal devices, wherein the management data link identifier for managing the at least one other terminal device in the DM instruction is linked to the management data of the first terminal device, or the management data identifier for managing at least one other terminal device in the DM instruction is the same as the management data identifier of the first terminal device; or
if the DM instruction carries one copy of management data and DM indication information, parse the DM instruction to be used for managing the at least two terminal devices, wherein the DM indication information indicates the management data is used for managing the at least two terminal devices.

8. The DMP according to claim 6 or 7, wherein the information delivering unit further comprises:
an information delivering subunit, configured to deliver the DM instruction that carries the management data to the at least two terminal devices separately.

9. The DMP according to claim 6 or 7, further comprising:
an authorization message receiving unit, configured to receive authorization messages from the at least two terminal devices, wherein the authorization messages carry identifier information of a Device Management Server DMS to be accessed by the at least two terminal devices;
an authorization message parsing unit, configured to parse the authorization messages, and judge whether the DMS is supported according to the identifier information of the DMS;
a request message sending unit, configured to send a proxy DM request to the at least two terminal devices if the DMS is supported; and
an authorization command receiving unit, configured to receive DM authorization commands sent by the at least two terminal devices.

10. The DMP according to claim 6 or 7, further comprising:
an account information configuring unit, configured to allocate account information to the at least two terminal devices; and
a session managing unit, configured to set up DM sessions with the at least two terminal devices according to the allocated account information.

11. A Device Management DM system, comprising:
a Device Management Proxy DMP, configured to: receive a DM instruction sent by a Device Management Server DMS; parse the DM instruction to be used for managing at least two terminal devices, wherein management data, used for managing the at least two terminal devices, indicated in the DM instruction is the same; obtain the management data indicated in the DM instruction only once; and deliver the obtained management data to the at least two terminal devices so that the at least two terminal devices perform DM according to the management data, wherein the DMP is further configured to:
allocate a local link identifier to the obtained management data;
deliver the DM instruction that carries the local link identifier of the management data to the at least two terminal devices; and
deliver the management data to the at least two terminal devices if the at least two terminal devices request obtaining the management data according to the local link identifier of the received management data;
a terminal device, configured to receive the management data delivered by the DMP; and
the DMS, configured to deliver the DM instruction to the DMP, wherein the DM instruction is used for managing the at least two terminal devices, and the management data indicated in the DM instruction is the same.

## Patentansprüche

1. Geräteverwaltungs- (DM - Device Management)Verfahren, das Folgendes umfasst:
Empfangen (101) einer DM-Anweisung;
Parsen (102) der DM-Anweisung zur Verwendung zum Verwalten mindestens zweier Endgeräte, wobei in der DM-Anweisung angezeigte, zum Verwalten der mindestens zwei Endgeräte verwendete Verwaltungsdaten gleich sind;
Erhalten (103) der in der DM-Anweisung angezeigten Verwaltungsdaten nur einmal; und
Liefern (104) der erhaltenen Verwaltungsdaten an die mindestens zwei Endgeräte, so dass die mindestens zwei Endgeräte die DM gemäß den Verwaltungsdaten durchführen, wobei der Schritt des Lieferns der erhaltenen Verwaltungsdaten an die mindestens zwei Endgeräte Folgendes umfasst:
Zuordnen einer lokalen Streckenkennung zu den erhaltenen Verwaltungsdaten;
Liefern der DM-Anweisung, die die lokale Streckenkennung der Verwaltungsdaten führt, an die mindestens zwei Endgeräte; und
Liefern der Verwaltungsdaten an die mindestens zwei Endgeräte, falls die mindestens zwei Endgeräte das Erhalten der Verwaltungsdaten gemäß der lokalen Streckenkennung der empfangenen Verwaltungsdaten anfordern.

2. DM-Verfahren nach Anspruch 1, wobei:
der Schritt des Parsens (102) der zum Verwalten der mindestens zwei Endgeräte zu verwendenden DM-Anweisung, wobei die in der DM-Anweisung angezeigten, zum Verwalten der mindestens zwei Endgeräte verwendeten Verwaltungsdaten gleich sind, Folgendes umfasst:
falls die DM-Anweisung Verwaltungsdaten-Streckenkennungen zum Verwalten der jeweils mindestens zwei Endgeräte führt, Parsen der zum Verwalten der mindestens zwei Endgeräte zu verwendenden DM-Anweisung und die Verwaltungsdaten-Streckenkennungen zum Verwalten der jeweils mindestens zwei Endgeräte sind die gleichen; oder
falls die DM-Anweisung Verwaltungsdaten-Streckenkennungen zum Verwalten der jeweils mindestens zwei Endgeräte führt und Verwaltungsdatenkennungen zum Verwalten der jeweils mindestens zwei Endgeräte führt, Parsen der zum Verwalten der mindestens zwei Endgeräte zu verwendenden DM-Anweisung und die Verwaltungsdaten-Streckenkennungen oder die Verwaltungsdatenkennungen in der DM-Anweisung sind die gleichen; oder
falls die DM-Anweisung Verwaltungsdaten zum Verwalten eines ersten Endgeräts und mindestens eine Verwaltungsdaten-Streckenkennung zum Verwalten anderer Endgeräte führt, Parsen der zum Verwalten der mindestens zwei Endgeräte zu verwendenden DM-Anweisung und die Verwaltungsdaten-Streckenkennung ist mit den Verwaltungsdaten des ersten Endgeräts verknüpft; oder
falls die DM-Anweisung die Verwaltungsdaten zum Verwalten des ersten Endgeräts und einer Verwaltungsdatenkennung des ersten Endgeräts, mindestens eine Verwaltungsdaten-Streckenkennung zum Verwalten anderer Endgeräte und eine Verwaltungsdatenkennung führt, Parsen der zum Verwalten der mindestens zwei Endgeräte zu verwendenden DM-Anweisung, und die mindestens eine Verwaltungsdaten-Streckenkennung zum Verwalten anderer Endgeräte in der DM-Anweisung ist mit den Verwaltungsdaten des ersten Endgeräts verknüpft, oder die Verwaltungsdatenkennung zum Verwalten mindestens eines anderen Endgeräts in der DM-Anweisung ist gleich der Verwaltungsdatenkennung des ersten Endgeräts; oder
falls die DM-Anweisung eine Kopie von Verwaltungsdaten und DM-Anzeigeinformationen führt, Parsen der zum Verwalten der mindestens zwei Endgeräte zu verwendenden DM-Anweisung und die DM-Anzeigeinformation zeigt an, dass die Verwaltungsdaten zum Verwalten der mindestens zwei Endgeräte verwendet werden.

3. DM-Verfahren nach Anspruch 1 oder 2, wobei:
der Schritt des Lieferns (104) der erhaltenen Verwaltungsdaten an die mindestens zwei Endgeräte Folgendes umfasst:
Liefern der DM-Anweisung, die die Verwaltungsdaten führt, separat an die mindestens zwei Endgeräte.

4. DM-Verfahren nach Anspruch 1 oder 2, das weiterhin Folgendes umfasst:
Empfangen von Autorisierungsnachrichten von den mindestens zwei Endgeräten,
wobei die Autorisierungsnachrichten Kennungsinformationen eines Geräteverwaltungsservers (DMS - Device Management Server) führt, auf die die mindestens zwei Endgeräte zugreifen sollen;
Parsen der Autorisierungsnachrichten und Beurteilen, ob der DMS unterstützt wird, gemäß den Kennungsinformationen des DMS;
Senden einer Proxy-DM-Anforderung an die mindestens zwei Endgeräte, falls der DMS unterstützt wird; und
Empfangen von von den mindestens zwei Endgeräten gesendeten DM-Autorisierungsbefehlen.

5. DM-Verfahren nach Anspruch 1 oder 2, das weiterhin Folgendes umfasst:
Zuordnen von Konteninformationen zu den mindestens zwei Endgeräten; und
Einrichten von DM-Sitzungen mit den mindestens zwei Endgeräten gemäß den zugeordneten Konteninformationen, Erhalten von Verwaltungsobjekt- (MO - Management Object) Dateninformationen der mindestens zwei Endgeräte durch die DM-Sitzungen und Abbilden der MO-Dateninformationen auf einen lokalen Ort.

6. Geräteverwaltungsproxy (DMP- Device Management Proxy), der Folgendes umfasst:
eine Anweisungsempfangseinheit (201), konfiguriert zum Empfangen einer Geräteverwaltungsanweisung (DM-Anweisung);
eine Anweisungsparseneinheit (202), konfiguriert zum Parsen der zum Verwalten von mindestens zwei Endgeräten zu verwendenden DM-Anweisung, wobei in der DM-Anweisung angezeigte, zum Verwalten der mindestens zwei Endgeräte verwendete Verwaltungsdaten gleich sind;
eine Datenerhalteeinheit (203), konfiguriert zum Erhalten der in der DM-Anweisung angezeigten Verwaltungsdaten nur einmal; und
eine Informationsliefereinheit (204), konfiguriert zum Liefern der erhaltenen Verwaltungsdaten an die mindestens zwei Endgeräte, so dass die mindestens zwei Endgeräte eine DM gemäß den Verwaltungsdaten durchführen, wobei die Informationsliefereinheit (204) weiterhin Folgendes umfasst:
eine lokale Kennungskonfigurierungsuntereinheit, konfiguriert zum Zuordnen einer lokalen Streckenkennung zu den erhaltenen Verwaltungsdaten; und
eine Anweisungslieferuntereinheit, konfiguriert zum Liefern der DM-Anweisung, die die lokale Streckenkennung der Verwaltungsdaten führt, an die mindestens zwei Endgeräte; und
eine Datenlieferuntereinheit, konfiguriert zum Liefern der Verwaltungsdaten an die mindestens zwei Endgeräte, so dass die mindestens zwei Endgeräte DM gemäß der DM-Anweisung durchführen, falls die mindestens zwei Endgeräte das Erhalten der Verwaltungsdaten gemäß der lokalen Streckenkennung der empfangenen Verwaltungsdaten anfordern.

7. DMP nach Anspruch 6, wobei:
die Anweisungsparseneinheit (202) konfiguriert ist zu Folgendem: falls die DM-Anweisung Verwaltungsdaten-Streckenkennungen zum Verwalten der jeweils mindestens zwei Endgeräte führt, Parsen der zum Verwalten der mindestens zwei Endgeräte zu verwendenden DM-Anweisung, wobei die Verwaltungsdaten-Streckenkennungen zum Verwalten der jeweils mindestens zwei Endgeräte die gleichen sind; oder
falls die DM-Anweisung Verwaltungsdaten-Streckenkennungen zum Verwalten der jeweils mindestens zwei Endgeräte führt und Verwaltungsdatenkennungen führt,
Parsen der zum Verwalten der mindestens zwei Endgeräte zu verwendenden DM-Anweisung, wobei die Verwaltungsdaten-Streckenkennungen zum Verwalten der jeweils mindestens zwei Endgeräte oder die Verwaltungsdatenkennungen die gleichen sind; oder
falls die DM-Anweisung Verwaltungsdaten zum Verwalten eines ersten Endgeräts und mindestens eine Verwaltungsdaten-Streckenkennung zum Verwalten anderer Endgeräte führt, Parsen der zum Verwalten der mindestens zwei Endgeräte zu verwendenden DM-Anweisung, wobei die Verwaltungsdaten-Streckenkennung zum Verwalten anderer Endgeräte mit den Verwaltungsdaten des ersten Endgeräts verknüpft ist; oder
falls die DM-Anweisung Verwaltungsdaten zum Verwalten des ersten Endgeräts und eine Verwaltungsdatenkennung des ersten Endgeräts, mindestens eine Verwaltungsdaten-Streckenkennung zum Verwalten anderer Endgeräte und eine Verwaltungsdatenkennung führt, Parsen der zum Verwalten der mindestens zwei Endgeräte zu verwendenden DM-Anweisung, wobei die Verwaltungsdaten-Streckenkennung zum Verwalten des mindestens einen anderen Endgeräts in der DM-Anweisung mit den Verwaltungsdaten des ersten Endgeräts verknüpft ist oder
die Verwaltungsdatenkennung zum Verwalten mindestens eines anderen Endgeräts in der DM-Anweisung gleich der Verwaltungsdatenkennung des ersten Endgeräts ist; oder
falls die DM-Anweisung eine Kopie von Verwaltungsdaten und DM-Anzeigeinformationen führt, Parsen der zum Verwalten der mindestens zwei Endgeräte zu verwendenden DM-Anweisung, wobei die DM-Anzeigeinformation anzeigt, dass die Verwaltungsdaten zum Verwalten der mindestens zwei Endgeräte verwendet werden.

8. DMP nach Anspruch 6 oder 7, wobei die Informationsliefereinheit weiterhin Folgendes umfasst:
eine Informationslieferuntereinheit, konfiguriert zum Liefern der DM-Anweisung,
die die Verwaltungsdaten führt, separat an die mindestens zwei Endgeräte.

9. DMP nach Anspruch 6 oder 7, der weiterhin Folgendes umfasst:
eine Autorisierungsnachrichtempfangseinheit, konfiguriert zum Empfangen von Autorisierungsnachrichten von den mindestens zwei Endgeräten, wobei die Autorisierungsnachrichten Kennungsinformationen eines Geräteverwaltungsservers, DMS, führt, auf die die mindestens zwei Endgeräte zugreifen sollen;
eine Autorisierungsnachrichtparseneinheit, konfiguriert zum Parsen der Autorisierungsnachrichten und Beurteilen, ob der DMS unterstützt wird, gemäß den Kennungsinformationen des DMS;
eine Anforderungsnachrichtsendeeinheit, konfiguriert zum Senden einer Proxy-DM-Anforderung an die mindestens zwei Endgeräte, falls der DMS unterstützt wird; und
eine Autorisierungsbefehlsempfangseinheit, konfiguriert zum Empfangen von von den mindestens zwei Endgeräten gesendeten DM-Autorisierungsbefehlen.

10. DMP nach Anspruch 6 oder 7, der weiterhin Folgendes umfasst:
eine Konteninformationskonfigurierungseinheit, konfiguriert zum Zuordnen von Konteninformationen zu den mindestens zwei Endgeräten; und
eine Sitzungsverwaltungseinheit, konfiguriert zum Einrichten von DM-Sitzungen mit den mindestens zwei Endgeräten gemäß den zugeordneten Konteninformationen.

11. Geräteverwaltungssystem (DM-System), das Folgendes umfasst:
einen Geräteverwaltungsproxy, DMP, konfiguriert zum: Empfangen einer durch einen Geräteverwaltungsserver, DMS, gesendeten DM-Anweisung; Parsen der für das Verwalten von mindestens zwei Endgeräten zu verwendenden DM-Anweisung,
wobei die in der DM-Anweisung angezeigten, zum Verwalten der mindestens zwei Endgeräte verwendeten Verwaltungsdaten gleich sind; Erhalten der in der DM-Anweisung angezeigten Verwaltungsdaten nur einmal; und Liefern der erhaltenen Verwaltungsdaten an die mindestens zwei Endgeräte, so dass die mindestens zwei Endgeräte eine DM gemäß den Verwaltungsdaten durchführen, wobei der DMP weiterhin konfiguriert ist zum:
Zuordnen einer lokalen Streckenkennung zu den erhaltenen Verwaltungsdaten;
Liefern der DM-Anweisung, die die lokale Streckenkennung der Verwaltungsdaten führt, an die mindestens zwei Endgeräte; und
Liefern der Verwaltungsdaten an die mindestens zwei Endgeräte, falls die mindestens zwei Endgeräte das Erhalten der Verwaltungsdaten gemäß der lokalen Streckenkennung der empfangenen Verwaltungsdaten anfordern;
ein Endgerät, konfiguriert zum Empfangen der durch den DMP gelieferten Verwaltungsdaten; und
den DMS, konfiguriert zum Liefern der DM-Anweisung an den DMP, wobei die DM-Anweisung zum Verwalten der mindestens zwei Endgeräte verwendet wird und die in der DM-Anweisung angezeigten Verwaltungsdaten gleich sind.

## Revendications

1. Procédé de Gestion de Dispositifs, DM (Device Management) comprenant :
la réception (101) d'une instruction DM ;
l'analyse syntaxique (102) de l'instruction DM devant être utilisée pour gérer au moins deux dispositifs terminaux, les données de gestion, utilisées pour gérer les au moins deux dispositifs terminaux, indiquées dans l'instruction DM, étant identiques ;
l'obtention (103) des données de gestion, indiquées dans l'instruction DM une seule fois ; et
la fourniture (104) des données de gestion obtenues aux au moins deux dispositifs terminaux de manière à ce que les au moins deux dispositifs terminaux exécutent la gestion DM conformément aux données de gestion, l'étape de fourniture des données de gestion obtenues aux au moins deux dispositifs terminaux comprenant :
l'allocation d'un identifiant de liaison local aux données de gestion obtenues;
la fourniture de l'instruction DM qui achemine l'identifiant de liaison local des données de gestion aux au moins deux dispositifs terminaux ; et
la fourniture des données de gestion aux au moins deux dispositifs terminaux si les au moins deux dispositifs terminaux demandent l'obtention des données de gestion conformément à l'identifiant de liaison local des données de gestion reçues.

2. Procédé DM selon la revendication 1, dans lequel :
l'étape d'analyse syntaxique (102) de l'instruction DM devant être utilisée pour gérer les au moins deux dispositifs terminaux, les données de gestion utilisées pour gérer les au moins deux dispositifs terminaux, indiquées dans l'instruction DM, étant identiques, comprend :
si l'instruction DM achemine des identifiants de liaison de données de gestion respectivement destinés à gérer les au moins deux dispositifs terminaux, l'analyse syntaxique de l'instruction DM devant être utilisée pour gérer les au moins deux dispositifs terminaux, les identifiants de liaison de données de gestion respectivement destinés à gérer les au moins deux dispositifs terminaux étant identiques ; ou
si l'instruction DM achemine des identifiants de liaison de données de gestion respectivement destinés à gérer les au moins deux dispositifs terminaux et achemine des identifiants de données de gestion respectivement destinés à gérer les au moins deux dispositifs terminaux, l'analyse syntaxique de l'instruction DM devant être utilisée pour gérer les au moins deux dispositifs terminaux, les identifiants de liaison de données de gestion ou les identifiants de données de gestion contenus dans l'instruction DM étant identiques ; ou
si l'instruction DM achemine des données de gestion destinées à gérer un premier dispositif terminal et au moins un identifiant de liaison de données de gestion destiné à gérer d'autres dispositifs terminaux, l'analyse syntaxique de l'instruction DM devant être utilisée pour gérer les au moins deux dispositifs terminaux, l'identifiant de liaison de données de gestion étant lié aux données de gestion du premier dispositif terminal ; ou
si l'instruction DM achemine les données de gestion destinées à gérer le premier dispositif terminal et un identifiant de données de gestion du premier dispositif terminal, au moins un identifiant de liaison de données de gestion destiné à gérer d'autres dispositifs terminaux et un identifiant de données de gestion, l'analyse syntaxique de l'instruction DM devant être utilisée pour gérer les au moins deux dispositifs terminaux, l'au moins un identifiant de liaison de données de gestion destiné à gérer d'autres dispositifs terminaux dans l'instruction DM étant lié aux données de gestion du premier dispositif terminal, ou l'identifiant de données de gestion destiné à gérer au moins un autre dispositif terminal dans l'instruction DM étant identique à l'identifiant de données de gestion du premier dispositif terminal ;
ou
si l'instruction DM achemine une copie de données de gestion et des informations d'indication DM, l'analyse syntaxique de l'instruction DM devant être utilisée pour gérer les au moins deux dispositifs terminaux, les informations d'indication DM indiquant que les données de gestion sont utilisées pour gérer les au moins deux dispositifs terminaux.

3. Procédé DM selon la revendication 1 ou 2, dans lequel :
l'étape de fourniture (104) des données de gestion obtenues aux au moins deux dispositifs terminaux comprend :
la fourniture séparée de l'instruction DM qui achemine les données de gestion aux au moins deux dispositifs terminaux.

4. Procédé DM selon la revendication 1 ou 2, comprenant en outre :
la réception de messages d'autorisation en provenance des au moins deux dispositifs terminaux, les messages d'autorisation acheminant des informations d'identifiant d'un Serveur de Gestion de Dispositifs, DMS (Device Management Server), auquel doivent accéder les au moins deux dispositifs terminaux ;
l'analyse syntaxique des messages d'autorisation et le fait de déterminer si le DMS est pris en charge conformément aux informations d'identifiant du DMS ;
l'envoi d'une demande DM de mandataire aux au moins deux dispositifs terminaux si le DMS est pris en charge ; et
la réception de commandes d'autorisation DM envoyées par les au moins deux dispositifs terminaux.

5. Procédé DM selon la revendication 1 ou 2, comprenant en outre :
l'allocation d'informations de compte aux au moins deux dispositifs terminaux ; et
l'établissement de sessions DM avec les aux moins deux dispositifs terminaux conformément aux informations de compte allouées, l'obtention d'informations de données d'Objets de Gestion, MO (Management Object), des au moins deux dispositifs terminaux par l'intermédiaire des sessions DM, et la mise en correspondance des informations de données MO avec une position locale.

6. Mandataire de Gestion de Dispositifs, DMP (Device Management Proxy), comprenant :
une unité de réception d'instruction (201), configurée pour recevoir une instruction de Gestion de Dispositifs (DM) ;
une unité d'analyse syntaxique d'instruction (202), configurée pour analyser syntaxiquement l'instruction DM devant être utilisée pour gérer au moins deux dispositifs terminaux, les données de gestion utilisées pour gérer les au moins deux dispositifs terminaux, indiquées dans l'instruction DM, étant identiques ;
une unité d'obtention de données (203), configurée pour obtenir les données de gestion indiquées dans l'instruction DM une seule fois ; et
une unité de fourniture d'informations (204) configurée pour fournir les données de gestion obtenues aux au moins deux dispositifs terminaux de manière à ce que les au moins deux dispositifs terminaux exécutent une gestion DM conformément aux données de gestion, l'unité de fourniture d'informations (204) comprenant en outre :
une sous-unité de configuration d'identifiant local, configurée pour allouer un identifiant de liaison local aux données de gestion obtenues ; et
une sous-unité de fourniture d'instruction, configurée pour fournir l'instruction DM qui achemine l'identifiant de liaison local des données de gestion aux au moins deux dispositifs terminaux ; et
une sous-unité de fourniture de données, configurée pour fournir les données de gestion aux au moins deux dispositifs terminaux de manière à ce que les au moins deux dispositifs terminaux exécutent une gestion DM conformément à l'instruction DM, si les au moins deux dispositifs terminaux demandent l'obtention des données de gestion conformément à l'identifiant de liaison local des données de gestion reçues.

7. Mandataire DMP selon la revendication 6, dans lequel :
l'unité d'analyse syntaxique d'instruction (202) est configurée pour : si l'instruction DM achemine des identifiants de liaison de données de gestion respectivement destinés à gérer les au moins deux dispositifs terminaux, analyser syntaxiquement l'instruction DM devant être utilisée pour gérer les au moins deux dispositifs terminaux, les identifiants de liaison de données de gestion respectivement destinés à gérer les au moins deux dispositifs terminaux étant identiques ; ou
si l'instruction DM achemine des identifiants de liaison de données de gestion respectivement destinés à gérer les au moins deux dispositifs terminaux et achemine des identifiants de données de gestion, analyser syntaxiquement l'instruction DM devant être utilisée pour gérer les au moins deux dispositifs terminaux, les identifiants de liaison de données de gestion respectivement destinés à gérer les au moins deux dispositifs terminaux ou les identifiants de données de gestion étant identiques ; ou
si l'instruction DM achemine des données de gestion destinées à gérer un premier dispositif terminal et au moins un identifiant de liaison de données de gestion destiné à gérer d'autres dispositifs terminaux, analyser syntaxiquement l'instruction DM devant être utilisée pour gérer les au moins deux dispositifs terminaux, l'identifiant de liaison de données de gestion destiné à gérer d'autres dispositifs terminaux étant lié aux données de gestion du premier dispositif terminal ; ou
si l'instruction DM achemine des données de gestion destinées à gérer le premier dispositif terminal et un identifiant de données de gestion du premier dispositif terminal, au moins un identifiant de liaison de données de gestion destiné à gérer d'autres dispositifs terminaux et un identifiant de données de gestion, analyser syntaxiquement l'instruction DM devant être utilisée pour gérer les au moins deux dispositifs terminaux, l'identifiant de liaison de données de gestion destiné à gérer l'au moins un autre dispositif terminal dans l'instruction DM étant lié aux données de gestion du premier dispositif terminal, ou l'identifiant de données de gestion destiné à gérer au moins un autre dispositif terminal dans l'instruction DM étant identique à l'identifiant de données de gestion du premier dispositif terminal ; ou
si l'instruction DM achemine une copie de données de gestion et des informations d'indication DM, analyser syntaxiquement l'instruction DM devant être utilisée pour gérer les au moins deux dispositifs terminaux, les informations d'indication DM indiquant que les données de gestion sont utilisées pour gérer les au moins deux dispositifs terminaux.

8. Mandataire DMP selon la revendication 6 ou 7, dans lequel l'unité de fourniture d'informations comprend en outre :
une sous-unité de fourniture d'informations, configurée pour fournir séparément l'instruction DM qui achemine les données de gestion aux au moins deux dispositifs terminaux.

9. Mandataire DMP selon la revendication 6 ou 7, comprenant en outre :
une unité de réception de messages d'autorisation, configurée pour recevoir des messages d'autorisation en provenance des au moins deux dispositifs terminaux, les messages d'autorisation acheminant des informations d'identifiant d'un Serveur de Gestion de Dispositifs, DMS, auquel doivent accéder les au moins deux dispositifs terminaux ;
une unité d'analyse syntaxique de messages d'autorisation, configurée pour analyser syntaxiquement les messages d'autorisation et déterminer si oui ou non le serveur DMS est pris en charge conformément aux informations d'identifiant du DMS ;
une unité d'envoi de message de demande, configurée pour envoyer une demande DM de mandataire aux au moins deux dispositifs terminaux si le DMS est pris en charge ; et
une unité de réception de commandes d'autorisation, configurée pour recevoir des commandes d'autorisation DM envoyées par les au moins deux dispositifs terminaux.

10. Mandataire DMP selon la revendication 6 ou 7, comprenant en outre :
une unité de configuration d'informations de compte, configurée pour allouer des informations de compte aux au moins deux dispositifs terminaux ; et
une unité de gestion de sessions, configurée pour établir des sessions DM avec les au moins deux dispositifs terminaux conformément aux informations de compte allouées.

11. Système de Gestion de Dispositifs, DM, comprenant :
un Mandataire de Gestion de Dispositifs, DMP, configuré pour : recevoir une instruction DM envoyée par un Serveur de Gestion de Dispositifs, DMS ; analyser syntaxiquement l'instruction DM devant être utilisée pour gérer au moins deux dispositifs terminaux, les données de gestion utilisées pour gérer les au moins deux dispositifs terminaux, indiquées dans l'instruction DM, étant identiques ; obtenir les données de gestion indiquées dans l'instruction DM une seule fois ; et fournir les données de gestion obtenues aux au moins deux dispositifs terminaux de manière à ce que les au moins deux dispositifs terminaux exécutent une gestion DM conformément aux données de gestion, le mandataire DMP étant en outre configuré pour :
allouer un identifiant de liaison local aux données de gestion obtenues ;
fournir l'instruction DM qui achemine l'identifiant de liaison local des données de gestion aux au moins deux dispositifs terminaux ; et
fournir les données de gestion aux au moins deux dispositifs terminaux si les au moins deux dispositifs terminaux demandent l'obtention des données de gestion conformément à l'identifiant de liaison local des données de gestion reçues ;
un dispositif terminal, configuré pour recevoir les données de gestion fournies par le mandataire DMP ; et
le DMS, configuré pour fournir l'instruction DM au mandataire DMP, l'instruction DM étant utilisée pour gérer les au moins deux dispositifs terminaux et les données de gestion indiquées dans l'instruction DM étant identiques.
